Europäisches Patentamt

European Patent Office

Office européen des brevets

(11) Publication number: **0 192 395**
**A1**

(12) # EUROPEAN PATENT APPLICATION

(21) Application number: 86300913.0

(22) Date of filing: 11.02.86

(51) Int. Cl.⁴: **F 16 D 55/14**
**F 16 D 65/48**

(30) Priority: 13.02.85 GB 8503667

(43) Date of publication of application:
27.08.86 Bulletin 86/35

(84) Designated Contracting States:
DE FR GB IT

(71) Applicant: LUCAS INDUSTRIES public limited company
Great King Street
Birmingham, B19 2XF West Midlands(GB)

(72) Inventor: Hillen, Klaus
Dierdorferstrasse 562
D-5450 Neuweid(DE)

(74) Representative: Spall, Christopher John et al,
BARKER, BRETTELL & DUNCAN 138 Hagley Road
Edgbaston Birmingham B16 9PW(GB)

(54) Improvements in self-energising disc brakes.

(57) In a self-energising disc brake of the spreading type the housing (5) of the brake includes a radial wall (17) in the form of a flange which extends between opposite, axially spaced, end walls of which the inner faces (3, 4) constitute radial braking surfaces. Diametrically opposed first and second openings (20, 21) provided in the flange (17) provide mountings for an hydraulic actuator (22) and a mechanical brake-applying mechanism (23) or an adjuster (50).

EP 0 192 395 A1

FIG.1.

0192395

1

# IMPROVEMENTS IN SELF-ENERGISING DISC BRAKES

This invention relates to self-energising disc brakes of the kind in which rotatable friction discs provided with linings of friction material are adapted to be brought into engagement with spaced opposed radial surfaces in a housing by pressure plates located between the friction discs and centred by stationary pilot lugs, balls or rollers are located in co-operating oppositely inclined recesses in the adjacent faces of the pressure plates, and the application of the brake is initiated by moving the pressure plates angularly in opposite directions, the pressure plates then moving apart, due to the tendency for the balls or rollers to ride up ramps defined by the edges of the recesses, and into engagement with the friction discs which are urged into engagement with the radial surfaces, and the pressure plates are carried round with the friction discs until one is arrested by the engagement of a lug on the plate with a drag-taking stop abutment in the housing, the continued angular movement of the other pressure plate providing a servo action.

Self-energising brakes of the kind set forth may be dry or they may be of the liquid cooled type, and such brakes are commonly used in tractors and like vehicles and are hereinafter called brakes of the kind set forth.

In known brakes of the type set forth relative angular movement of the pressure plates to initiate application of the brake is usually achieved by a mechanism which extends into the brake through a radial opening in the housing, and the abutment for arresting angular movement of one of the pressure plates, suitably an anchor pin, is preferably disposed diametrically opposite the mechanism. The mechanism may comprise a pair of links coupled at their outer ends to lugs on the pressure plates, and a pull-rod which is coupled to the inner ends of the lugs and is adapted to be withdrawn radially from the housing, either hydraulically for normal service braking, or manually for parking or emergency braking, and the anchor pin may comprise a pin extending axially between the opposite ends of the housing which contain the radial surfaces.

According to our invention, in a brake of the kind set forth, the housing includes a radial wall which extends between opposite, axially spaced, end walls of which the inner faces define the radial surfaces, and diametrically opposed first and second openings are provided in the said radial wall to constitute mountings for different components of the brake.

This facilitates construction and assembly since both openings can be machined by a straight-through diametral bore, or by manipulation of a cutting tool in each of two opposed diametral directions.

Conveniently the first opening provides a mounting for brake-applying means, and the second opening provides a mounting for different means, for example different brake-applying means and/or means defining the drag-taking stop abutment.

Preferably the first opening comprises the mounting for an hydraulic actuator for normal service braking, the actuator comprising a cylinder body which is carried at the inner end of a spigot received in the first opening, and the body has a through bore of which the axis is tangential to the plates and in which work a pair of opposed pistons for co-operation at their outer ends between lugs on the pressure plates, the pistons being adapted to separate the lugs to initiate application of the brake when hydraulic fluid under pressure is admitted to a pressure space defined in the bore between adjacent ends of the pistons.

The second opening comprises a second bore which may constitute the mounting for a mechanical brake-applying mechanism.

In one such construction the mechanical brake-applying mechanism comprises a cam shaft which is journalled for rotation in the bore and carries at its inner end a cam received between, and adapted to separate, spaced lugs on the two plates, and at its outer end exterior of the housing a lever for rotating the cam shaft in the bore. The cam may co-operate directly with the lugs, or it may act on them through rocking dollies or thrust members. In either construction the cam may act as a drag-taking stop abutment when the brake is applied hydraulically.

In another construction the mechanical brake-applying means comprise a thrust member which is guided for radial movement in the second bore and, at its inner end, acts on an angularly movable lever co-operating with, and acting between, lugs on the two plates.

In a modification, the second bore constitutes a mounting for an adjuster which regulates manually the relative angular retracted position of the pressure plates to compensate for wear of the friction linings. In one construction the adjuster comprises a cam carried by the inner end of a cam shaft which is journalled for rotation in the second bore, and the cam shaft is rotated in the bore to effect a corresponding angular movement of the cam by manually operable means exterior of the housing.  In such a construction the cam comprises the drag-taking stop abutment.

Some embodiments of our invention are illustrated in the accompanying drawings in which:-

Figure 1 is an end view of a portion of a spreading brake;

Figure 2 is a section on the line 2-2 of Figure 1;

Figure 3 is a plan of the hydraulic actuator;

Figure 4 is a view on arrow "4" in Figure 1;

Figure 5 is a view of the lower portion of Figure 1 but showing an adjuster mechanism;

Figure 6 is a plan of the portion shown in Figure 5;

Figure 7 is a view similar to Figure 1 showing a modified mechanical actuating mechanism;

Figure 8 is a view similar to Figure 7, but showing a different mechanical actuating mechanism; and

Figure 9 is another view similar to Figure 8 of yet another mechanical actuating mechanism.

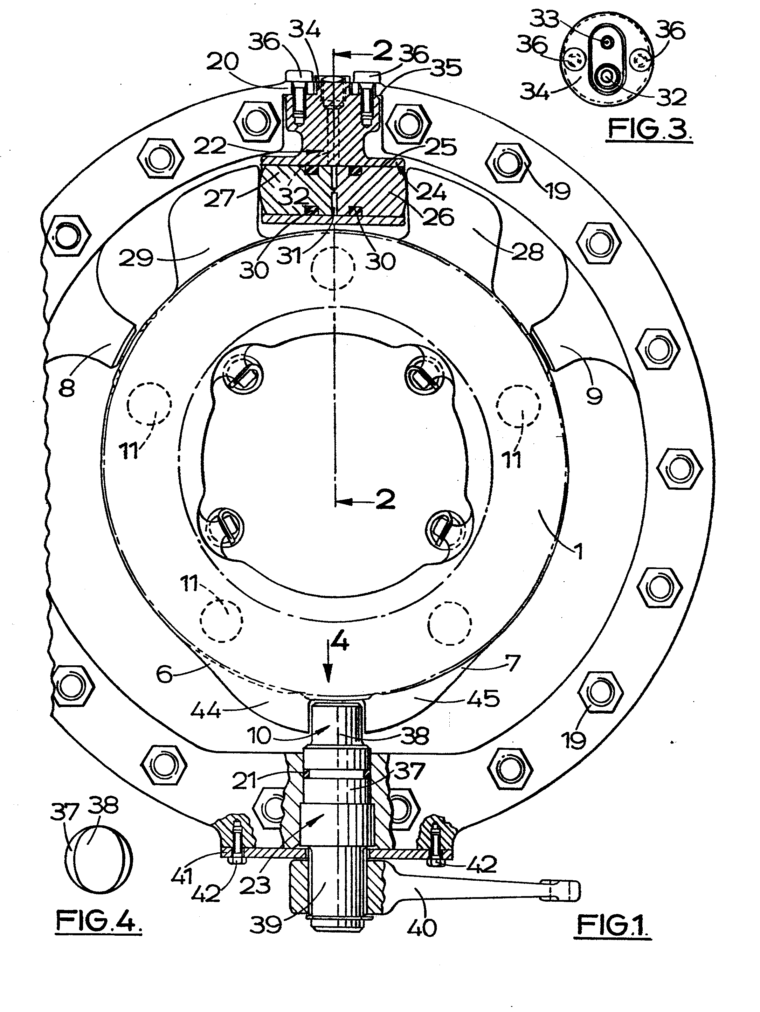

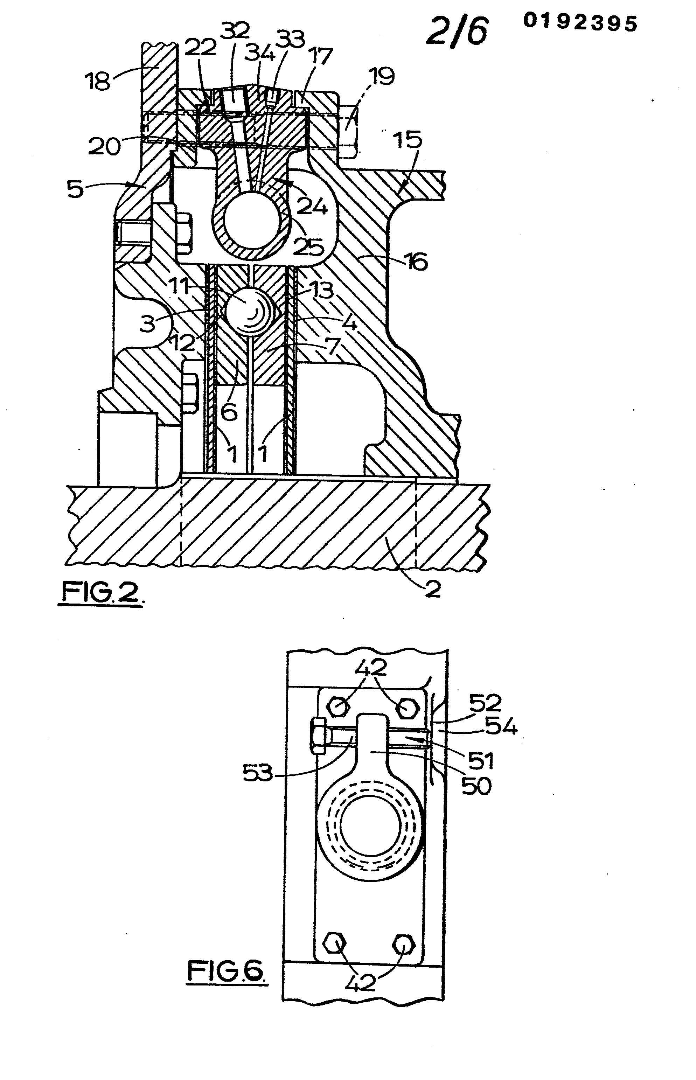

The brake illustrated in Figures 1 to 4 of the drawings is of a conventional spreading type in which two rotatable friction discs 1 provided with friction linings and splined on a rotatable shaft 2 are adapted to be brought into engagement with spaced opposed radial surfaces 3, 4 in a housing 5 by pressure plates 6, 7 located between the discs 1 and centred by three angularly spaced stationary pilots 8, 9, 10. Balls 11 are located in co-operating oppositely inclined angularly spaced recesses 12, 13 in the adjacent faces of the pressure plates 6, 7.

The application of the brake is initiated by moving the pressure plates 6, 7 angularly in opposite directions which causes the pressure plates 6, 7 to move axially relatively away from each other due to the tendency for the balls 11 to ride up ramps defined by the end faces of the recesses 12, 13. This urges the friction discs 1 into engagement with the faces 3 and 4 in the housing 5. The presure plates 6, 7 are then carried round with the discs 1 until one is arrested by the engagement of a lug on a respective plate with a drag-taking abutment, as will hereinafter be described, whereafter continued angular movement of the other plate provides a servo action.

The housing 5 comprises a first member 15 in the form of a casting comprising an end wall 16 of which the inner face constitutes the radial surface 4, and an integral, axially extending annular flange constituting a radial wall 17. The open face at the free end of the flange 17 is closed by an end plate assembly 18 bolted to the casting 15 by angularly spaced bolts 19. Diametrically opposed radial openings 20, and 21, constituted by stepped bores, are provided in the radial flange 17.

6

The radial opening 20 provides a mounting for an hydraulic actuator 22 by means of which the brake can be applied hydraulically for normal service braking, and the radial opening 21 provides a mounting for a mechanical brake-applying mechanism 23 for applying the brake in an emergency or for parking.

As illustrated, the hydraulic actuator 22 comprises a cylinder 24 having an open-ended longitudinal through-bore 25 in which work a pair of oppositely acting pistons 26, 27 for engagement between lugs 28 and 29 on the plates 6, 7. Each piston 26, 27 carries a seal 30 adjacent to its inner end. A pressure space 31 defined in bore 25 between adjacent inner ends of the pistons 26 and 27 is connected to a master cylinder through a passage 32, and a bleed passage 33 also leads from the pressure space 31.

The cylinder 24 is integral with the inner end of a spigot 34 of which the outer end is clamped against a face 35 at a shoulder at the step in diameter in the bore 20 by means of circumferentially spaced bolts 36.

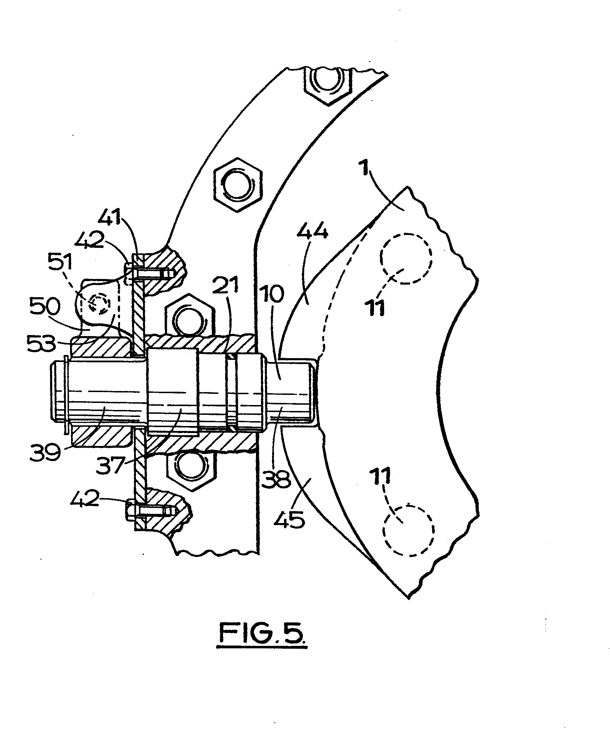

The mechanism 23 comprises a cam shaft 37 which is of stepped outline complementary to that of the bore 21 in which it is rotatably mounted together with a seal which it carries, a cam 38 integral with the inner portion of the cam shaft 37 which is of smaller diamter, and an outer end portion 39 which projects from the housing 5 and on which an angularly movable lever 40 is splined. The cam shaft 37 is retained in the bore 21 by means of a retaining plate 41 which is secured to the exterior of the flange 17 by means of bolts 42 and has a central opening of a diameter smaller than the portion of the cam shaft 37 which is of greater diameter, but larger than the splined portion 39 which projects through it. The cam 38 is elliptical in section as shown in Figure 4.

When the brake is applied hydraulically for normal service braking, the pressure space 31 is pressurised to urge to pistons 26, 27 in opposite directions and the plates 6, 7 angularly and axially as described above until the movement of one of the plates 6, 7 is arrested by the engagement of a respective lug 44, 45 with the cam 38 which acts as the drag-taking abutment. Thereafter the further operation of the brake is as described above.

When the brake is applied mechanically, the lever 40 is operative to rotate the shaft 37 in order to move the cam 38 angularly about the shaft as an axis. This acts to separate the two lugs 44, 45, in turn to impart angular and axial movement to the pressure plates as described above, with one of the plates being arrested by its engagement with the cam 38 itself, or, depending upon the geometry of the brake, by the engagement of the corresponding lug 28, 29 with an adjacent end of the cylinder 24 which acts as the drag-taking stop abutment.

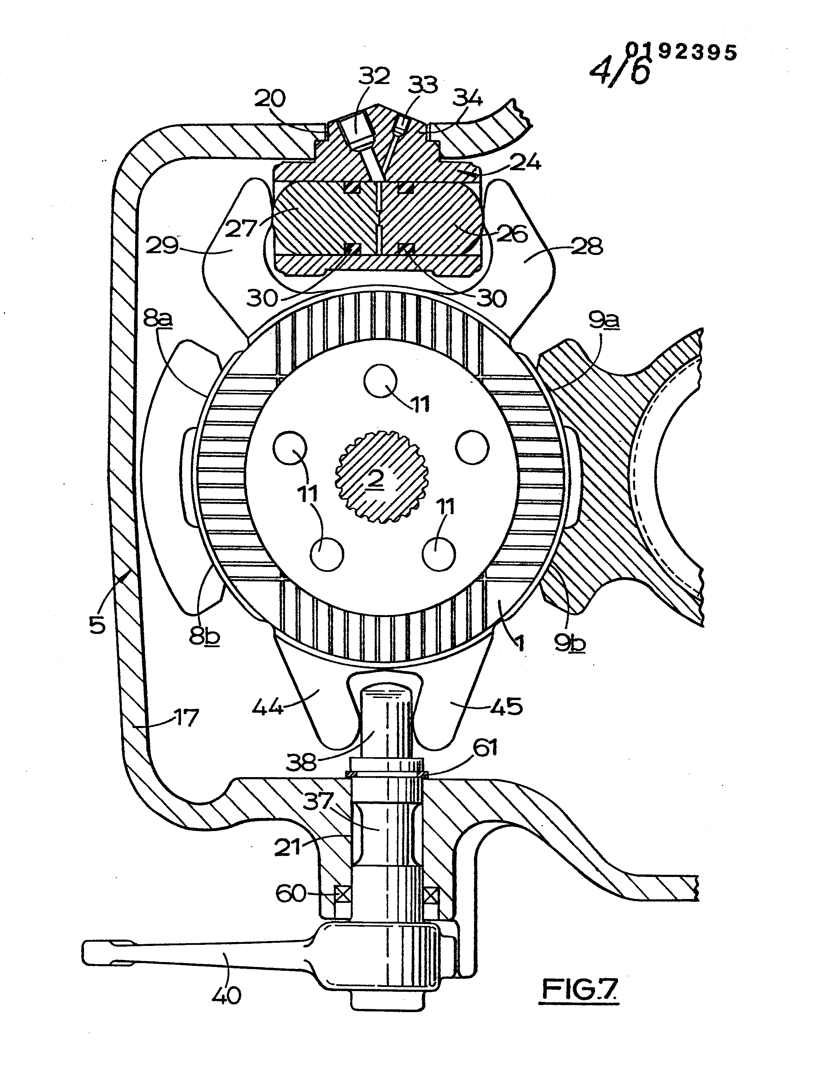

In the modified construction illustrated in Figures 5 and 6 of the drawings, the brake-applying lever 40 is replaced by an arm 50 through which a bolt 51 is adjustably screwed, whereby to replace the mechanical brake-applying mechanism with an adjuster. The free end of the shank 53 of the bolt 51 abuts against an abutment face 52 on a lug 54 on the housing 5.

By screwing the bolt 51 through the arm 50, the angular position of the cam 38 can be adjusted. Since this, in turn, determines the retracted position of the two plates, by separating the two lugs 44, 45, the plates 6, 7 will separate due to the effect of the balls 11 co-operating with the ramps in the recesses 12, 13 and the retracted position of the pressure plates 6, 7 can be adjusted to compensate for wear of the friction linings of the plates 1.

The construction and operation of the modification of Figures 5 and 6 is otherwise the same as that of Figures 1 to 4, and corresponding reference numerals have been applied to corresponding parts.

In the modified brake of Figure 7, the pilots 8 and 9 are each replaced by two angularly spaced pilots 8a, 8b, and 9a, 9b respectively, and the spigot 34 is welded into the opening 20. The retaining plate 41 is omitted, and the cam shaft 37 is journalled for rotation in a bearing 60 at the outer end of the opening 21, with the cam shaft 37 retained in the bore 21 by means of a circlip 61 co-operating with the inner face of the radial wall 17.

The construction and operation of the brake of Figure 7 is otherwise the same as that of Figures 1 to 4 and corresponding reference numerals have been applied to corresponding parts.

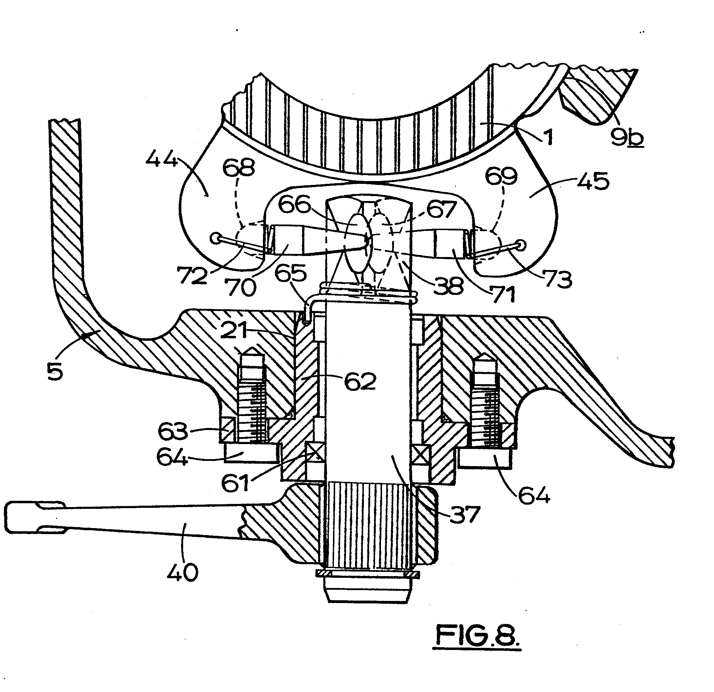

In the modified construction of Figure 8, the cam shaft 37 is journalled for rotation in a bearing 61 in a housing 62 which is inserted in the opening 21 and the opening 21 is of constant diameter, throughout its axial length, thereby facilitating manufacture. The housing 62 has a radial flange 63 by means of which it is secured to the housing 5, being clamped against the flange 17 by bolts 64. The cam shaft 37 is secured in the housing 62 and is biassed towards a retracted position by means of a torsion spring 65 which encircles the inner end of the cam shaft 37 adjacent to the cam 38. The cam 38 is provided with diametrically opposed recesses 66, 67, and adjacent faces of the lugs 44, 45 are provided with complementary pockets 68, 69. A pair of thrust members or dollies 70, 71 have rocking engagements at opposite ends with the bases of the respective pairs of recesses and pockets 66, 68 and 67, 69 in which they are received, and the thrust members 70, 71 are coupled to each lug 44, 45 by means of a respective tension spring 72, 73. The springs 72, 73 ensure that the outer ends of the thrust members 70, 71, which are of part-spherical outline, are retained in contact at all times with the pockets in the lugs 44, 45.

When the brake is applied mechanically, angular movement of the lever 40 imparted to the cam shaft 37 and the cam 38, is transmitted to the lugs 44 and 45 through the thrust members 70, 71.

The construction and operation of the brake of Figure 8 is otherwise the same as that of Figure 7 and corresponding reference numerals have been applied to corresponding parts.

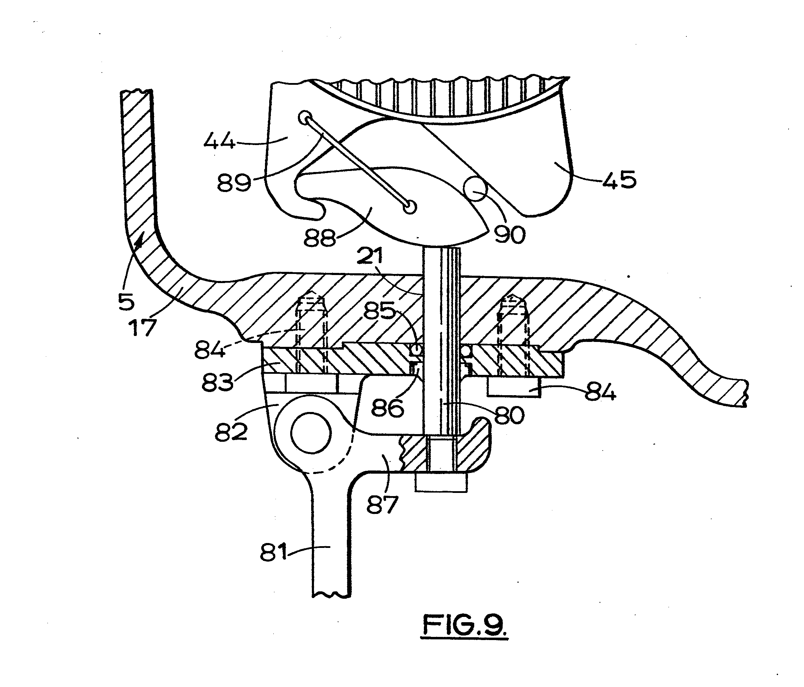

In the modified construction of Figure 9, the opening 21 is of relatively small diameter and a thrust member 80 is guided to slide through it.

A bell-crank lever 81 is pivotally mounted between spaced lugs 82 on a mounting plate 83 which, in turn, is secured to the flange 17 by bolts 84. The thrust member 80 is guided to slide through spaced seals 85, and 86 in the plate 83.

One arm 87 of the bell-crank lever 81 has a rocking engagement with the outer end of the thrust member 80, and the inner end of the thrust member 80 acts on the plates 6, 7 through a lever 88. The lever 88 is of flattened, elliptical outline, having a pivotal engagement at one end with the lug 44 to which it is secured by means of a tension spring 89, and at its curved opposite edges, the lever 88 is disposed between the inner end of the thrust member 80 and a roller 90 which, in turn, has a rolling engagement with the adjacent edge of the lug 45.

Angular movement of the bell-crank lever 81 about the pivot urges the thrust member 80 inwardly. This, in turn, urges the lever 88 inwardly and the rolling engagements with the roller 90 cause the lugs 44 and 45 to move angularly in opposite directions. This causes the pressure plates 6, 7 to move angularly and axially as described above to apply the brake.

The construction and operation of the brake of Figure 9 is otherwise the same as that of Figure 7 and corresponding reference numerals have been applied to corresponding parts.

## CLAIMS

1. A self-energising disc brake in which rotatable friction discs (1) provided with linings of friction material are adapted to be brought into engagement with spaced opposed radial surfaces (3, 4) in a housing (5) by pressure plates (6, 7) located between the friction discs and centred by stationary pilot lugs (8, 9, 10), balls or rollers (11) are located in co-operating oppositely inclined recesses (12, 13) in the adjacent faces of the pressure plates, and the application of the brake is initiated by moving the pressure plates angularly in opposite directions, the pressure plates then moving apart, due to the tendency for the balls or rollers to ride up ramps defined by the edges of the recesses, and into engagement with the friction discs which are urged into engagement with the radial surfaces, and the pressure plates are carried round with the friction discs until one is arrested by the engagement of a lug on the plate with a drag-taking stop abutment in the housing, the continued angular movement of the other pressure plate providing a servo action, characterised in that the housing (5) includes a radial wall (17) which extends between opposite, axially spaced, end walls (16, 17) of which the inner faces define the radial surfaces (3, 4), and diametrically opposed first and second openings (2, 21) are provided in the said radial wall to constitute mountings for different components (22, 23) of the brake.

2. A brake according to claim 1, characterised in that the first opening provides a mounting for brake-applying means (22), and the second opening provides a mounting for different means (23).

3. A brake according to claim 1 or claim 2, characterised in that the first opening (20) comprises the mounting for an hydraulic actuator (22) for normal service braking, the actuator comprising a cylinder body (24) which is carried at the inner end of a spigot (34) received in the first opening, and the body has a through bore (25) of which the axis is tangential to the plates and in which work a pair of opposed pistons (26, 27) for co-operation at their outer ends between lugs (28, 29) on the pressure plates, the pistons being adapted to separate the lugs to initiate application of the brake when hydraulic fluid under pressure is admitted to a pressure space (31) defined in the bore between adjacent ends of the pistons.

4. A brake according to claim 1 or claim 2, characterised in that the second opening (21) comprises a second bore which constitutes the mounting for a mechanical brake-applying mechanism (23).

5. A brake according to claim 4, characterised in that the mechanical brake-applying mechanism comprises a cam shaft (37) which is journalled for rotation in the bore (21) and carries at its inner end a cam (38) received between, and adapted to separate, spaced lugs (44, 45) on the two plates, and at its outer end exterior of the housing a lever (40) for rotating the cam shaft in the bore.

6. A brake according to claim 5, characterised in that the cam (38) co-operates directly with the lugs (44, 45).

7. A brake according to claim 5, characterised in that the cam (38) acts on the lugs (44, 45) through rocking dollies or thrust members (70, 71).

8. A brake according to any of claims 5-7, characterised in that the cam (38) acts on the drag-taking stop abutment when the brake is applied hydraulically.

9. A brake according to claim 4, characterised in that the mechanical brake-applying means comprise a thrust member (80) which is guided for radial movement in the second bore (21) and, at its inner end, acts on an angularly movable lever (88) co-operating with, and acting between, lugs (44, 45) on the two plates (6, 7).

10. A brake according to claim 1 or claim 2, characterised in that the second opening (21) constitutes a mounting for an adjuster which regulates manually the relative angular retracted position of the pressure plates (6, 7) to compensate for wear of the friction linings.

11. A brake according to claim 10, characterised in that the adjuster comprises a cam (38) carried by the inner end of a cam shaft (39) which is journalled for rotation in the second bore (21), and the cam shaft is rotated in the bore to effect a corresponding angular movement of the cam by manually operable means (50, 51) exterior of the housing (5).

12. A brake according to claim 11, characterised in that the cam (38) acts as the drag-taking stop abutment.

1/6

0192395

FIG.3.

FIG.4.

FIG.1.

FIG.2.

FIG.6.

FIG.5.

FIG.7

5/6

0192395

FIG.8.

FIG.9.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 067 692 (LUCAS INDUSTRIES LTD.) * Page 2, lines 83-122; figures 4,5 * | 1 | F 16 D 55/14 F 16 D 65/48 |
| A | GB-A-1 288 683 (GIRLING LTD.) * Whole document; figures 1-9 * | 1 | |
| A | GB-A-1 255 450 (HERMANN KLAUE) | | |
| A | DE-B-1 014 857 (HERMANN KLAUE) | | |
| A | DE-A-2 037 273 (HERMANN KLAUE) | | |
| A | DE-A-2 412 704 (HERMANN KLAUE) | | TECHNICAL FIELDS SEARCHED (Int. Cl.4) F 16 D 55/00 F 16 D 65/00 |
| A | DE-A-1 630 652 (HERMANN KLAUE) | | |
| A | DE-A-1 675 276 (HERMANN KLAUE) | | |
| A | DE-A-1 680 130 (HERMANN KLAUE) | | |

The present search report has been drawn up for all claims

| Place of search | Date of completion of the search | Examiner |
|---|---|---|
| THE HAGUE | 21-05-1986 | BRAEMS C.G.I. |